# EUROPÄISCHE PATENTSCHRIFT

(11) **EP 3 688 334 B1**
(45) Veröffentlichungstag und Bekanntmachung des Hinweises auf die Patenterteilung: **17.11.2021**
(21) Anmeldenummer: 18800840.3
(22) Anmeldetag: 19.09.2018
(51) Int. Cl.: F16D 65/12

(54) **SCHEIBENBREMSE**
DISC BRAKE
FREIN À DISQUE

(30) Priorität: 26.09.2017 DE 102017008992
(43) Veröffentlichungstag der Anmeldung: 05.08.2020
(73) Patentinhaber: Ford-Werke GmbH, 50735 Köln (DE); FAGOR EDERLAN, S.COOP., 20540 Eskoriatza Gipuzkoa (ES)
(72) Erfinder: WILWERS, Thomas, 50858 Köln (DE); VERPOORT, Clemens, 40789 Monheim r. Rhein (DE); RETTIG, Marc Oliver, 50823 Köln (DE); GRABIEC, Tomasz, 51427 Bergisch Gladbach (DE); GAZTAÑAGA GALLASTEGI, Idurre, 20550 Guipuzcoa (ES); LABRADOR VAREA, Ricardo, 48200 Vizcaya (ES); LANDA SASTRE, Iñaki, 20230 Legazpi (Guipuzcoa) (ES); OCHOA DE ZABALEGUI PEREDA, Maria Edurne, Gasteiz (Alava) (ES); ZUBELDIA BARRON, Inaki, 20496 Guipuzcoa (ES)
(74) Vertreter: Wettlaufer, Frank
(86) Internationale Anmeldenummer: PCT/DE2018/000264
(87) Internationale Veröffentlichungsnummer: WO 2019/063034

(56) Entgegenhaltungen:
- DE-A1-102013 009 096
- JP-A- 2016 079 250
- US-A1- 2012 138 397

## Beschreibung

Die Erfindung betrifft eine Scheibenbremse mit den Merkmalen des Oberbegriffs des Anspruchs 1, aufweisend eine Bremsscheibe aus Leichtmetall und zumindest einen darauf einwirkenden Bremsbelag wobei die Bremsscheibe an zumindest einer ihrer Bremsbahnen eine Vielzahl von Vertiefungen, bevorzugt von Rillen aufweist, die über die Fläche der Bremsbahn, bevorzugt über die gesamte Fläche der Bremsbahn verteilt sind.

Die DE 10 2013 009 096 A1 offenbart eine Vorrichtung zur Anordnung einer Radfelge mit Mitteln zur axialen Anlage der Radfelge, wobei die Radfelge und die Mittel im zusammengebauten Zustand einen gemeinsamen Anlagebereich aufweisen. Die Mittel bestehen zumindest teilweise aus einer übereutektischen Aluminiumlegierung, die beim Erstarren aus der Schmelze kristalline Hartstoffpartikel an der Oberfläche der Mittel abscheidet. Die oberflächlichen Hartstoffpartikel der Mittel bilden im Anlagebereich einen Formschluss mit der Radfelge aus. Die Mittel können als Distanzscheibe oder als Topf einer Scheibenbremse oder auch als Bremstrommel einer Trommelbremse ausgebildet sein. Eine für eine Scheibenbremse ausgeführte Bremsscheibe dagegen ist aus einer Eisenlegierung, also aus einem Grauguss hergestellt.

Due US 2012 / 0 138 397 A1 befasst sich mit einem Bremsrotor mit einer Rotorhalterung. Auf dem Rotorträger ist ein Bremsband angeordnet und umgibt diesen. Das Bremsband hat erste und zweite Bremsbelagaufnahmeflächen auf gegenüberliegenden Seiten des Bremsbandes. Mindestens eine Bremsbelagaufnahmefläche definiert mindestens eine Nut, die einen Nutweg aufweist, der sich entlang der mindestens eine Bremsbelagaufnahmefläche erstreckt und eine variable Tiefe aufweist.

Mit der JP 2016 - 079 250 A soll als Reibungsmaterial für Fahrzeugscheibenbremsbeläge und dergleichen eine Reibungsmaterialzusammensetzung bereitgestellt werden, die unter Hochgeschwindigkeits-Fading-Bedingungen einen hohen Reibungskoeffizienten aufweist. Die Reibungsmaterialzusammensetzung enthält demnach entweder kein Kupfer oder einen Gehalt von 0,5 Massen-% oder weniger Kupfer, selbst wenn Kupfer enthalten ist. Von daher wird eine Reibmaterialzusammensetzung vorgeschlagen, die ein Bindemittel, ein organisches Füllmaterial, ein anorganisches Füllmaterial und ein Fasersubstrat umfasst, wobei die Reibmaterialzusammensetzung 8 bis 30 Massen-% eines oder mehrerer aus Zinn ausgewählter Metallsulfide wie Wismutsulfid und Molybdändisulfid hat.

Bei Fahrzeugen, insbesondere bei Kraftfahrzeugen, bilden Scheibenbremsen die wohl am weitesten verbreitete Bauart von Bremsanlagen. Scheibenbremsen setzen sich im Wesentlichen aus einer Bremsscheibe und einem die Bremsscheibe randseitig umgreifenden Bremssattel zusammen. Hierbei ist die Bremsscheibe über eine drehbar im Achsschenkel gelagerte Radnabe mit dem abzubremsenden Rad des Fahrzeugs verbunden. Demgegenüber ist der Bremssattel an dem Achsschenkel fixiert. Die eigentliche Verzögerung wird durch an die Bremsscheibe anlegbare Bremsbeläge erreicht, welche zu beiden Seiten der Bremsscheibe zwischen ihr und dem Bremssattel angeordnet sind.

Je nach Anwendungsfall können Bremsscheiben sowohl aus Eisen aber auch aus Karbon-Keramik oder Aluminium bestehen. Aus Eisen, näherhin aus Grauguss, hergestellte Bremsscheiben sind zwar überaus verbreitet, weisen aber die bekannte Problematik des Oberflächenrostes an nicht von Bremsbelägen abgedeckten Oberflächenbereichen auf. Dieser Oberflächenrost ist unansehnlich und erzeugt den visuellen Eindruck mangelnder Qualität. Auch die Reibeigenschaften der korrosiv angegriffenen Oberflächenbereiche ist bezogen auf die nicht korrosiv angegriffenen Oberflächenbereiche unterschiedlich, was zu dem unerwünschten "Bremsenrubbeln" führt. Es können auch störende Geräusche (NVH) entstehen. Zudem ergibt sich eine mitunter schädigende Wirkung in Kombination mit Aluminium-Felgen, in deren Oberfläche sich die beim Bremsvorgang lösenden heißen Eisenpartikel förmlich einbrennen können. So ist bekannt, dass ungefähr 50-70% des gesamten Bremsfeinstaubes auf den Abrieb der Bremsscheiben aus Eisen zurückzuführen ist.

Insgesamt sollten Bremsscheiben eine möglichst verschleißarme sowie wenig Feinstaub abgebende Bremsoberfläche aufweisen. Um dies zu erreichen, wird deren möglichst harte Oberflächenausbildung angestrebt. Bremsscheiben aus Aluminium müssen hohen, komplexen und wechselwirkenden Anforderungen gewachsen sein. Dabei spielen Faktoren wie z.B. Festigkeit, Korrosionsbeständigkeit, stabile Reibwertgenerierung unter für Fahrzeuge gängigen Betriebszuständen (Salz, Kälte, Hitze, Nässe, Feuchtigkeit, etc.) mit gleichzeitiger Verschleißbeständigkeit eine Rolle. Aluminium selbst ist dazu nicht geeignet, weswegen Aluminium-Matrix-Verbundlegierungen mit eingelagerten Hartstoffpartikeln eingesetzt werden. So wird beispielsweise bei Bremsscheiben aus Aluminium entsprechend Siliziumkarbid (SiC) zugesetzt, welche sich als verschleißfeste Schutzschicht an der Oberfläche ausscheiden. Allerdings ist die Herstellung von Bremsscheiben aus nicht-eisenhaltigen Werkstoffen mitunter schwierig und zumeist kostenintensiv. Jedoch ist man im Zuge der gewünschten CO2-Reduzierung bestrebt, Gewicht einzusparen, was mit dem Ersatz des Eisens durch Leichtmetalle erreichbar ist. Zudem bewirken Leichtmetalle eine Reduzierung der ungefederten und zudem rotierenden Masse, was sich auf das Handling des Kraftfahrzeugs und die Fahrwiderstände positiv auswirkt.

In der DE 10 2011 121 292 A1 ist zum Beispiel eine Bremsscheibe aus einer Aluminium-Matrix-Verbundlegierung beschrieben, wobei die Aluminium-Matrix-Verbundlegierung einen Anteil an Siliziumkarbidpartikeln von zumindest 40 Vol.% aufweist. Bei der komplizierten Herstellung wird eine Siliziumkarbidpartikel angereicherte Schicht und eine entsprechend Siliziumkarbidpartikel abgereicherte Schicht erzeugt. Die Siliziumkarbidpartikel abgereicherte Schicht wird von der Siliziumkarbidpartikel angereicherten Schicht getrennt. Zur Endbearbeitung der Siliziumkarbidpartikel angereicherten Schicht ist eine T6-Wärmebehandlung vorgesehen, die Lösungsglühen und Warmauslagern umfasst. Das Verfahren zur Herstellung des Bremsscheibenhalbzeugs mit dem gewünschten sehr hohen Siliziumkarbidpartikel Betrag in der angereicherten Schicht ist sehr kompliziert und wegen der sehr zeitaufwändigen Verfahrensschritte sehr kostspielig. Zudem wird noch ein nachträglicher Oberflächenbearbeitungsschritt, wie z.B. das Ätzen notwendig werden, was die Umwelt weiter belastet.

Die gattungsbildende DE 20 2015 101 510 U1 befasst sich mit einer Fahrzeugscheibenbremse, aus Leichtmetall, die an zumindest einer ihrer Bremsbahnen eine Vielzahl von Rillen aufweist, die über die gesamte Fläche der Bremsbahn verteilt sind. Das Leichtmetall ist legiertes Aluminium.

Der Erfindung liegt die Aufgabe zugrunde, eine Scheibenbremse anzugeben, die bei einfacher Herstellung der Bremsscheibe hinsichtlich Verschleißbeständigkeit und Korrosionsbeständigkeit verbessert ist.

Erfindungsgemäß wird die Aufgabe durch eine Scheibenbremse mit den Merkmalen des Anspruchs 1 gelöst, wobei die Unteransprüche vorteilhafte Ausgestaltungen der Erfindung betreffen.

Es ist darauf hinzuweisen, dass die in der nachfolgenden Beschreibung einzeln aufgeführten Merkmale sowie Maßnahmen in beliebiger, technisch sinnvoller Weise miteinander kombiniert werden können und weitere Ausgestaltungen der Erfindung aufzeigen. Die Beschreibung charakterisiert und spezifiziert die Erfindung zusätzlich.

Gemäß der Erfindung ist die Bremsscheibe aus einer übereutektischen Aluminium-Silizium-Legierung gebildet, die einen Silizium Anteil von 13 bis 21 Gew.% und einen Maximalanteil von 0,3 Gew.% Kupfer aufweist, wobei der Bremsbelag NAO-Reibmaterialien aufweist.

NAO-Reibmaterialien (Non Abestos Organic) sind im Sinne dieser Erfindung asbestfrei. Die NAO-Reibmaterialien können kupferhaltig oder kuperfrei sein. Natürlich kann der Bremsbelag auch andere als NAO-Reibmaterialien aufweisen.

Mit der Erfindung wird so eine verbesserte Scheibenbremse bestehend aus Bremsscheibe und Bremsbelag zur Verfügung gestellt, bei welchem die in der Bremsbahn angeordneten Rillen den Reibwert erhöhen und den Verschleiß reduzieren. Das Nassbremsverhalten wird ebenso deutlich verbessert.

Auf der Bremsbahn sind Vertiefungen angeordnet, die als gesenkte Bohrungen ausgeführt sein können. Bevorzugt sind die Vertiefungen als Rillen ausgeführt.

Zur Anordnung und Ausgestaltung der Rillen auf der zumindest einen Bremsbahn oder auf beiden Bremsbahnen wird auf die DE 20 2015 101 510 U1 verwiesen, die diesbezüglich vollinhaltlich auch bezüglich der dortigen Figuren 1 bis 3 einschließlich deren Beschreibung Bestandteil dieser Erfindung ist.

Die übereutektische Aluminium-Silizium-Legierung der Bremsscheibe weist in zielführender Ausführung die Bestandteile 13 bis 21 Gew.% Silizium, bevorzugt 16 bis 20 Gew.% Silizium,
0,2 bis 0,7 Gew.% Magnesium,
Maximal 0,001 Gew.% Strontium,
Maximal 0,2 Gew.% Eisen,
0,06 bis 0,1 Gew.% Titan,
Maximal 0,3 Gew.% Kupfer und
als Rest Aluminium auf.

Durch den Maximalanteil von 0,3Gew.% Kupfer ist die Bremsscheibe nahezu kupferfrei, wobei Korrosionsbeständigkeit durch den Verzicht auf Kupfer erzielt wird. Aufgrund der übereutektischen Aluminium-Silizium-Legierung wird die Korrosionsbeständigkeit des tribologischen Systems, also der Scheibenbremse erhöht, wobei auf eine nachträgliche, kostenintensive Oberflächenschichttechnologie verzichtet werden kann. Der Effekt der verbesserten Korrosionsbeständigkeit kann durch das kupferfreie NAO-Reibmaterial der Bremsbeläge noch weiter verstärkt werden. Die geeignete Härte und Festigkeit der Bremsscheibe auch in hohen Temperaturbereichen von z.B. 400°C bis 500°C, bevorzugt von 400°C bis 450°C wird durch den hohen Siliziumgehalt erzielt.

Ideal ist dabei, wenn die Siliziumpartikel homogen verteilt sind, wobei die Siliziumpartikel erfindungsgemäß eine primäre Siliziumpartikelgröße von 30 bis 100 µm, bevorzugt maximal 50 µm, weiter bevorzugt 30 bis 50 µm aufweisen. Zweckmäßig ist vorgesehen, dass der Legierung AlCuP-Elemente (Aluminium-Kupfer-Phosphor) zugegeben werden, um einen Anteil von 15 bis 30 ppm Phosphor zu generieren, so dass die Kornfeinung des primären Siliziums und die homogene Verteilung erreicht wird. Dabei sind die AlCuP-Elemente als Stäbe so legiert, dass in der finalen übereutektischen Aluminium-Silizium-Legierung der maximale Kupfergehalt von 0,3 Gew% eingehalten wird.

Die Bremsscheibe weist in bekannter Ausgestaltung Reibringe auf, an denen die einander gegenüberliegenden Bremsbahnen angeordnet sind. An die Reibringe schließt sich der Bremsenhut an, mit welchem die Bremsscheibe mittels Schrauben an der Radnabe befestigt wird. Günstig im Sinne der Erfindung ist, wenn die Bremsscheibe vollständig einstückig hergestellt ist, bevorzugt gegossen wird. Als Gussverfahren bietet sich das Niederdruckgussverfahren (LPDC-Verfahren = Low Pressure Die Cast) an. Indem die Bremsscheibe vollständig einstückig gegossen wird, werden erhebliche Kosteneinsparungen erzielt, da außer einer spanenden Nachbearbeitung keine weiteren Behandlungen erforderlich sind. Die Bremsscheibe kann sowohl als solide Bremsscheibe oder als belüftete Bremsscheibe ausgeführt sein. Natürlich kann die Bremsscheibe auch mehrstückig, also zweiteilig (Bremsenhut, Reibring) hergestellt sein.

Anstelle des LPDC-Verfahrens könnte die Bremsscheibe auch mit anderen Gießverfahren, wie z.B. Kokillenguss (GDC = Gravity Die Casting) oder anderen Gussverfahren hergestellt werden. Das Niederdruckgussverfahren ist jedoch sinnvoll, da dessen Zuführeinrichtung ein homogenes Füllen der Gussform erlaubt und diese durch Beheizung und Isolierung eine vorteilhafte Wärmebilanz aufweist, so dass beste Erstarrungsbedingungen vorliegen. Dies bewirkt die gewünschte Mikrostruktur und eine reduzierte Mikroporosität der übereutektischen Aluminium-Silizium-Legierung. Mittels des erfindungsgemäßen Vorgehens wird so eine Härtevariation auf der Bremsbahn von weniger als 14 HB (Härte Brinell) erzielt. Die Härte der Bremsbahn bewirkt unmittelbar deren Abriebfestigkeit, wobei das Verschleißverhalten davon abhängig ist, wie hart die Oberfläche der Bremsbahn ist. Die Härte und Homogenität der Bremsbahn ist ausschlaggebend zur Bildung eines geeigneten Transferfilms zwischen dem Reibmaterial des Bremsbelags und der Bremsscheibe, wobei hier die auf der Bremsbahn angeordneten Vertiefungen in der bevorzugten Ausgestaltung als Nuten bzw. Rillen ebenso zielführend sind. Die notwendige Härte und Homogenität der Bremsbahn wird durch das besondere Niederdruckgussverfahren mit der beheizten und isolierten Gussform erreicht. Selbstverständlich sind die Eigenschaften, also auch die homogene Verteilung der Siliziumpartikel nicht nur an der Bremsbahn vorhanden, sondern aufgrund der einstückigen Herstellung der Bremsscheibe in der gesamten Bremsscheibe vorzufinden.

Obwohl die Bremsscheibe aus der annährend kupferfreien, übereutektischen Aluminium-Silizium-Legierung keiner weiteren Nachbearbeitung bedarf (außer der optionalen spanenden Bearbeitung), kann dennoch ein Hart-Anodisieren oder eine Laseroxidation vorgesehen werden, mit welchem eine weitere Verbesserung der Korrosionsbeständigkeit erreichbar sowie das Verschleißverhalten der Bremsscheibe aber auch des Bremsbelags verbesserbar ist.

Die Bremsscheibe wird bevorzugt mit zumindest den folgenden Schritten hergestellt: Erzeugen einer übereutektischen Aluminium-Silizium-Legierung mit einem hohen Siliziumgehalt, dann
Kornfeinung des primären Siliziums mittels eines 15 bis 30 ppm Anteils von Phosphor, dann
Niederdruckgießen, so dass eine homogene Mikrostruktur und geringe Mikroporosität erreicht wird, wobei der Herstellungsprozess unmittelbar abhängig von Gießparametern wie z.B. Gießtemperatur und Abkühlmaßnahmen ist.

Das bevorzugte Niederdruckgießen erlaubt ein Einfüllen von der Nabenseite der Bremsscheibe aus und ermöglicht ein 360° Füllen. Dies ist besonders dahingehend zielführend, als so die homogene Verteilung der Siliziumpartikel in der gesamten Bremsscheibe, also nicht nur im Bereich der Bremsbahn, erreicht wird. Die Gießtemperatur der Legierung sollte einen Betrag von 700°C bis 800°C aufweisen, so dass die erforderlichen und gewünschten Eigenschaften der Bremsscheibe erreichbar sind. Abweichungen von ±10% von der genannten Gießtemperatur sind möglich. Zweckmäßig ist, wenn sowohl in einem oberen Bereich als auch in einem unteren Bereich der Gießform eine Luftkühlung vorgesehen ist, um so die Bremsscheibe von der inneren Seite her zu kühlen, was auch bei belüfteten Bremsscheiben sinnvoll ist. Zusammen mit einem Flüssigkeitskühlkassettensystem, welches am Einfüllsystem der Gießform angeordnet ist, werden die erforderlichen und gewünschten Eigenschaften der Bremsscheibe erreicht.

Bisher noch nie wurden nahezu kupferfreie, übereutektische Aluminium-Silizium-Legierungen zur Herstellung von Bremsscheiben verwendet, an denen kupferfreie oder kupferhaltige NAO-Reibmaterialien (Bremsbeläge) angreifen, wobei in der Bremsbahn die Vielzahl von Vertiefungen, bevorzugt eine Vielzahl von Rillen angeordnet sind. Die Funktionalität der vollständig gegossenen Aluminium-Silizium-Legierungsbremsscheibe aus einer übereutektischen (bevorzugt 16-20 Gew.% Siliziumgehalt) nahezu kupferfreien Legierung wird, wie die Erfinder überraschend fanden, nur durch die Kombination mit einer genuteten Bremsbahn und den genannten kupferfreien oder kupferhaltigen NAO-Reibmaterialien erzielt. Anstelle von Rillen können auch gesenkte Bohrungen oder dergleichen Vertiefungen vorgesehen sein. Hierbei fungieren die Vertiefungen, bevorzugt Nuten oder Rillen im Zusammenspiel mit kupferfreien oder kupferhaltigen NAO-Reibmaterialien nicht nur als reibwertsteigernde Komponente, sondern helfen bei der Erzeugung einer Transferschicht welche sich zwischen Reibmaterial und Bremsscheibe bildet, dies reduziert den Verschleiß im Vergleich zu einer "glatten" Bremsbahn. Das Nassbremsverhalten wird ebenso deutlich verbessert. Die Korrosionsbeständigkeit der Bremsscheibe wird durch die übereutektische Aluminium-Silizium-Legierung mit einem Kupfergehalt von nahezu "null", also maximal 0,3 Gew.% Kupfer erzielt. Die geeignete Härte, Festigkeit, auch in Temperaturbereichen von 400°C-500 °C, bevorzugt von 400°C -450°C wird durch den hohen Siliziumgehalt erzielt, wobei auf nachfolgenden Temperaturbehandlungen und/oder auf Hinzugabe von Fasern verzichtet werden kann. Die primäre Siliziumpartikelgröße ist hierbei klein (bevorzugt 30-50 µm) wobei die Verteilung der Siliziumpartikel in der übereutektischen Aluminium-Silizium-Legierung homogen ist. Die Wirtschaftlichkeit der Technologie wird sichergestellt, da es sich in dem System um eine vollständig gegossene Bremsscheibe handelt. Die Bremsscheibe bedarf außer einer spanenden Nachbearbeitung keiner weiteren Behandlung um im genannten tribologischen System als Bremse zu funktionieren. Eine optionale "Hart Anodisierung" oder Oberflächenoxidation mittels Laser verbessert das Scheiben- und Belagsverschleißverhalten ebenso zusätzlich wie die Korrosionsbeständigkeit. Zur Erhöhung der Festigkeit und zur Verbesserung des Verschleißverhaltens kann der übereutektischen Aluminium-Silizium-Legierung noch Niob-Carbid hinzugeben werden.

## Patentansprüche

1. Scheibenbremse aufweisend eine Bremsscheibe aus Leichtmetall und zumindest einen darauf einwirkenden Bremsbelag wobei die Bremsscheibe aus einer übereutektischen Aluminium-Silizium-Legierung gebildet ist, die einen Silizium Anteil von 13 bis 21 GEw.% aufweist, **dadurch gekennzeichnet, dass** die Bremsscheibe an zumindest einer ihrer Bremsbahnen eine Vielzahl von Vertiefungen aufweist, die über die Fläche der Bremsbahn verteilt sind, wobei die übereutektischen Aluminium-Silizium-Legierung einen Maximalanteil von 0,3 Gew.% Kupfer aufweist, wobei der Bremsbelag NAO-Reibmaterialien aufweist, wobei Siliziumpartikel der übereutektischen Aluminium-Silizium-Legierung eine primäre Siliziumpartikelgröße von 30 bis 100 µm, bevorzugt 30 bis 50 µm, weiter bevorzugt maximal 50 µm aufweisen.

2. Scheibenbremse nach Anspruch 1,
**dadurch gekennzeichnet, dass**
die übereutektische Aluminium-Silizium-Legierung die Bestandteile
13 bis 21 Gew.% Silizium,
0,2 bis 0,7 Gew.% Magnesium,
maximal 0,001 Gew.% Strontium,
maximal 0,2 Gew.% Eisen,
0,06 bis 0,1 Gew.% Titan,
maximal 0,3 Gew.% Kupfer und
als Rest Aluminium aufweist.

3. Scheibenbremse nach Anspruch 1,
**dadurch gekennzeichnet, dass**
die übereutektische Aluminium-Silizium-Legierung die Bestandteile
16 bis 20 Gew.% Silizium,
0,2 bis 0,7 Gew.% Magnesium,
maximal 0,001 Gew.% Strontium,
maximal 0,2 Gew.% Eisen,
0,06 bis 0,1 Gew.% Titan,
maximal 0,3 Gew.% Kupfer und
als Rest Aluminium aufweist.

4. Scheibenbremse nach einem der vorhergehenden Ansprüche,
**dadurch gekennzeichnet, dass**
der übereutektischen Aluminium-Silizium-Legierung AlCuP-Elemente zugegeben werden, so dass ein Anteil von 15 bis 30 ppm Phosphor generiert wird.

5. Scheibenbremse nach einem der vorhergehenden Ansprüche,
**dadurch gekennzeichnet, dass**
die Bremsscheibe einstückig hergestellt, bevorzugt gegossen wird.

6. Scheibenbremse nach einem der vorhergehenden Ansprüche,
**dadurch gekennzeichnet, dass**
die Bremsscheibe mit dem Niederdruckgussverfahren hergestellt wird.

7. Scheibenbremse nach Anspruch 6,
**dadurch gekennzeichnet, dass**
die Gussform beheizt und isoliert ist.

8. Scheibenbremse nach einem der vorhergehenden Ansprüche,
**dadurch gekennzeichnet, dass**
die Bremsscheibe nach dem Gießvorgang hart anodisiert oder Laseroxidiert wird.

9. Scheibenbremse nach Anspruch 7 oder 8,
**dadurch gekennzeichnet, dass**
das NAO-Reibmaterial asbest- und kupferfrei oder kupferhaltig ist.

## Claims

1. A disc brake, comprising a brake disc of light metal and at least one brake pad acting on the same, wherein the brake disc is formed out of a hyper-eutectic aluminium silicon alloy, which has a silicon component of 13-21 % by weight, **characterised in that** the brake disc, on at least one of its brake tracks, has a plurality of recesses, which are distributed over the surface of the brake track,
wherein the hyper-eutectic aluminium silicon alloy has a maximum proportion of 0.3 % by weight of copper, wherein the brake pad comprises NAO friction materials, wherein silicon particles of the hyper-eutectic aluminium silicon alloy have a primary silicon particle size of 30-100 µm, preferably 30-50 µm, further preferably maximally 50 µm.

2. The disc brake according to Claim 1,
**characterised in that**
the hyper-eutectic aluminium silicon alloy has the components
13-21 % by weight of silicon,
0.2-0.7 % by weight of magnesium,
maximally 0.001 % by weight of strontium,
maximally 0.2 % by weight of iron,
0.06-0.1 % by weight of titanium,
maximally 0.3 % by weight of copper and as remainder aluminium.

3. The disc brake according to Claim 1,
**characterised in that**
the hyper-eutectic aluminium silicon alloy has the components
16-20 % by weight of silicon,
0.2-0.7 % by weight of magnesium,
maximally 0.001 % by weight of strontium,
maximally 0.2 % by weight of iron,
0.06-0.1 % by weight of titanium,
maximally 0.3 % by weight of copper and aluminium as remainder.

4. The disc brake according to any one of the preceding claims,
**characterised in that**
AlCuP elements are added to the hyper-eutectic aluminium silicon alloy, so that a component of 15-30 PPM of phosphorous is generated.

5. The disc brake according to any one of the preceding claims,
**characterised in that**
the disc brake is produced integrally, preferably cast.

6. The disc brake according to any one of the preceding claims,
**characterised in that**
the disc brake is produced with the low-pressure casting method.

7. The disc brake according to Claim 6,
**characterised in that**
the casting mould is heated and insulated.

8. The disc brake according to any one of the preceding claims,
**characterised in that**
following the casting operation the brake disc is hard anodised or laser oxidised.

9. The disc brake according to Claim 7 or 8,
**characterised in that**
the NAO friction material is asbestos and copper-free or copper-containing.

## Revendications

1. Frein à disque comportant un disque de frein en métal léger et au moins une garniture de frein agissant dessus, sachant que le disque de frein est formé d'un alliage aluminium-silicium hypereutectique, qui comporte une part de silicium de 13 à 21 %/poids, **caractérisé en ce que** le disque de frein comporte sur au moins une de ses pistes de freinage, une pluralité de cavités, qui sont réparties sur la surface de piste de freinage,
sachant que l'alliage aluminium-silicium hypereutectique comporte une part maximale de 0,3 %/poids de cuivre, sachant que la garniture de frein comporte des matériaux de friction NAO, sachant que les particules de silicium de l'alliage aluminium-silicium hypereutectique comportent une taille particulaire de silicium de 30 à 100 µm, de préférence de 30 à 50 µm.

2. Frein à disque selon la revendication 1, **caractérisé en ce que**
l'alliage aluminium-silicium hypereutectique comporte les composants de
silicium pour 13 à 21 %/poids
magnésium pour 0,2 à 0,7 %/poids
strontium pour 0,001 %/poids
fer pour 0,2 %/poids
titane pour 0,06 % à 0,1 %/poids,
cuivre pour un maximum de 0,3 %/poids et
d'aluminium pour le reste.

3. Frein à disque selon la revendication 1,
**caractérisé en ce que**
l'alliage aluminium-silicium hypereutectique comporte les composants de
silicium pour 16 à 20 %/poids
magnésium pour 0,2 à 0,7 %/poids
strontium pour 0,001 %/poids
fer pour un maximum de 0,2 %/poids
titane pour 0,06 % à 0,1 %/poids,
cuivre pour un maximum de 0,3 %/poids et
d'aluminium pour le reste.

4. Frein à disque selon l'une quelconque des revendications précédentes,
**caractérisé en ce que**
des éléments AlCuP sont ajoutés à l'alliage aluminium-silicium de telle manière qu'une partie de 15 à 30 ppm de phosphore est générée.

5. Frein à disque selon l'une quelconque des revendications précédentes,
**caractérisé en ce que**
le disque de frein est fabriqué en une seule pièce et est de préférence moulé.

6. Frein à disque selon l'une quelconque des revendications précédentes,
**caractérisé en ce que**
le disque de frein est fabriqué selon le procédé de moulage à basse pression.

7. Frein à disque selon la revendication 6,
**caractérisé en ce que**
le moule est chauffé et isolé.

8. Frein à disque selon l'une quelconque des revendications précédentes,
**caractérisé en ce que**
le disque de frein est anodisé dur ou oxydé au laser après l'opération de moulage.

9. Frein à disque selon la revendication 7 ou 8,
**caractérisé en ce que**
le matériau de friction NaO est exempt d'amiante et de cuivre ou contient du cuivre.
